# EUROPEAN PATENT APPLICATION

(11) **EP 4 502 882 A1**
(43) Date of publication of application: **05.02.2025**
(21) Application number: 23799512.1
(22) Date of filing: 02.05.2023
(51) Int. Cl.: G06N 20/00

(54) **LEARNING DEVICE, LEARNING METHOD, AND LEARNING PROGRAM**

(30) Priority: 02.05.2022 JP 2022076196
(71) Applicant: Mitsubishi Heavy Industries, Ltd., Tokyo 100-8332 (JP)
(72) Inventor: KATAOKA, Yujiro, Tokyo 100-8332 (JP); ITO, Masayuki, Tokyo 100-8332 (JP); MATSUNAMI, Natsuki, Tokyo 100-8332 (JP)
(74) Representative: Hoffmann Eitle
(86) International application number: PCT/JP2023/017148
(87) International publication number: WO 2023/214583

(57) **Abstract**

There is provided a learning device including: a processing unit that performs reinforcement learning of a learning model of an agent under a competitive environment in which agents compete against each other, in which the learning model includes a hyperparameter, and the processing unit executes: a step of setting the agent to be an opponent of the agent as a learning target; a step of evaluating a strength of the agent that is the opponent; a step of setting the hyperparameter of the learning model of the agent as the learning target according to the strength of the agent that is the opponent; and a step of executing the reinforcement learning by using the learning model after the setting.

## Description

### Technical Field

The present disclosure relates to a learning device, a learning method, and a learning program for multi-agent.

### Background Art

In the related art, a technique of adjusting a value of a hyperparameter of a neural network by using machine learning has been known (for example, refer to PTL 1). In this learning, under a condition that a learning error of machine learning is lower than a threshold value, the value of the hyperparameter is adjusted according to a known method such as a random search, a grid search, or Bayesian optimization.

### Citation List

### Patent Literature

[PTL 1] Japanese Unexamined Patent Application Publication No. 2021-15526

### Summary of Invention

### Technical Problem

On the other hand, a learning model using a neural network is mounted on an agent 5, and learning is performed under a predetermined environment. As the predetermined environment, there is a competitive environment in which agents 5 compete against each other. In the competitive environment, in a case where an opponent of the agent 5 as a learning target is changed, learning is executed according to the changed opponent. At this time, even in a case where the opponent of the agent 5 is an opponent for which learning in the related art is used but is not effective, there is a possibility that learning may be performed using a learning model in the related art. In this case, it is difficult to perform learning for searching for a learning model for winning against an opponent, and it is difficult to generate a learning model capable of winning against an opponent. In other words, there is a possibility that a learning model, which is likely to win only against an opponent that can be used for learning in the related art, is generated.

Therefore, an object of the present disclosure is to provide a learning device, a learning method, and a learning program capable of executing learning of a learning model with high versatility under a competitive environment.

### Solution to Problem

According to the present disclosure, there is provided a learning device including: a processing unit that performs reinforcement learning of a learning model of an agent under a competitive environment in which agents compete against each other, in which the learning model includes a hyperparameter, and the processing unit executes: a step of setting the agent to be an opponent of the agent as a learning target; a step of evaluating a strength of the agent that is the opponent; a step of setting the hyperparameter of the learning model of the agent as the learning target according to the strength of the agent that is the opponent; and a step of executing the reinforcement learning by using the learning model after the setting.

According to the present disclosure, there is provided a learning method of performing reinforcement learning of a learning model of an agent under a competitive environment in which agents compete against each other by using a learning device, in which the learning model includes a hyperparameter, and the learning method causes the learning device to execute: a step of setting the agent to be an opponent of the agent as a learning target; a step of evaluating a strength of the agent that is the opponent; a step of setting the hyperparameter of the learning model of the agent as the learning target according to the strength of the agent that is the opponent; and a step of executing the reinforcement learning by using the learning model after the setting.

According to the present disclosure, there is provided a learning program for performing reinforcement learning of a learning model of an agent under a competitive environment in which agents compete against each other by using a learning device, in which the learning model includes a hyperparameter, and the learning program causes the learning device to execute: a step of setting the agent to be an opponent of the agent as a learning target; a step of evaluating a strength of the agent that is the opponent; a step of setting the hyperparameter of the learning model of the agent as the learning target according to the strength of the agent that is the opponent; and a step of executing the reinforcement learning by using the learning model after the setting.

### Advantageous Effects of Invention

According to the present disclosure, it is possible to execute learning of a learning model with high versatility under a competitive environment.

### Brief Description of Drawings

Fig. 1 is a diagram for explaining learning using a learning model according to the present embodiment.
Fig. 2 is a diagram schematically illustrating a learning device according to the present embodiment.
Fig. 3 is a diagram illustrating a flow of a learning method according to the present embodiment.
Fig. 4 is a diagram for explaining a learning method according to the present embodiment.

### Description of Embodiments

Hereinafter, an embodiment according to the present invention will be described in detail based on the drawings. Note that the present invention is not limited to the embodiment. In addition, components in the embodiment described below include those that can be easily replaced by those skilled in the art, or those that are substantially the same. Further, the components described below can be combined as appropriate, and in a case where a plurality of embodiments are present, the embodiments can be combined.

### [Embodiment]

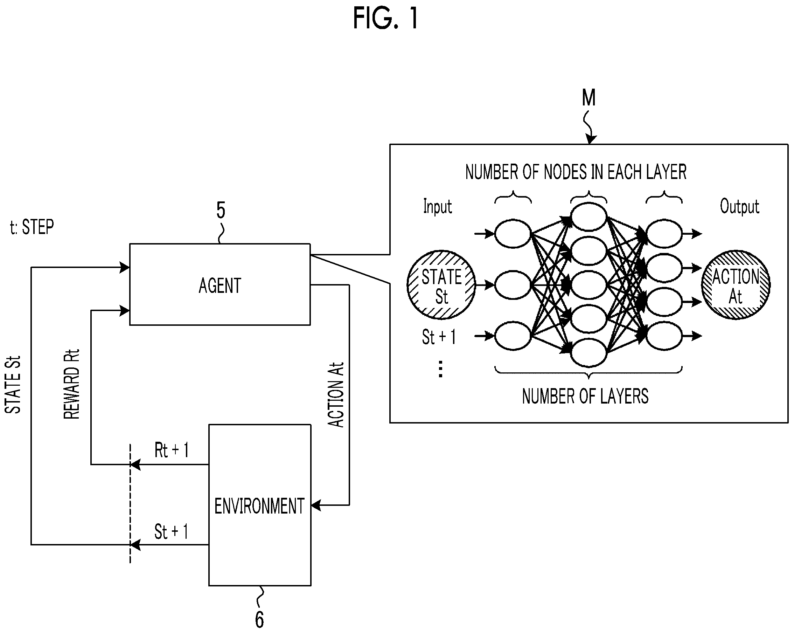

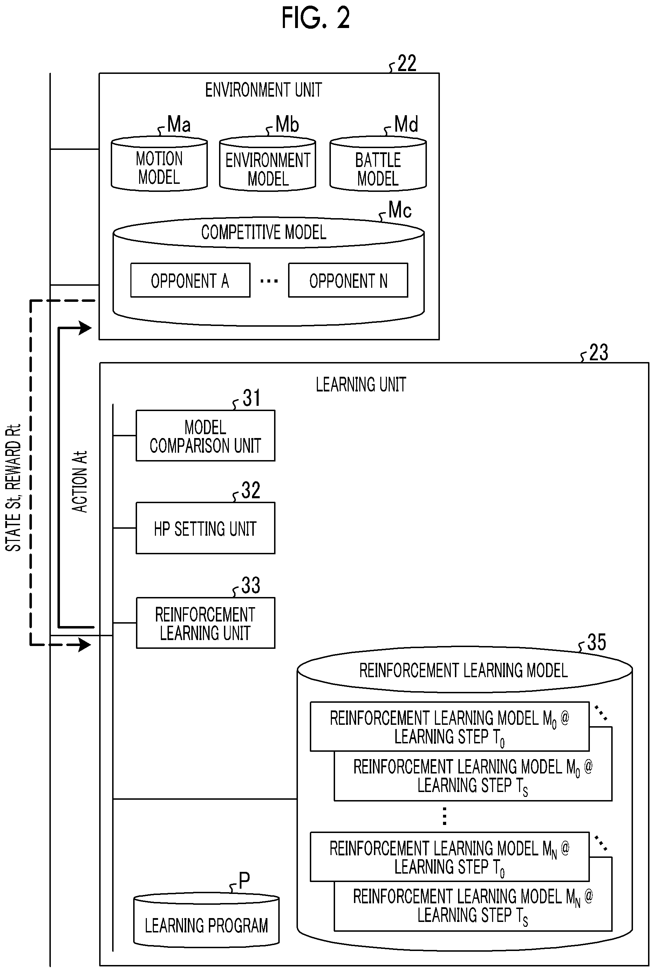

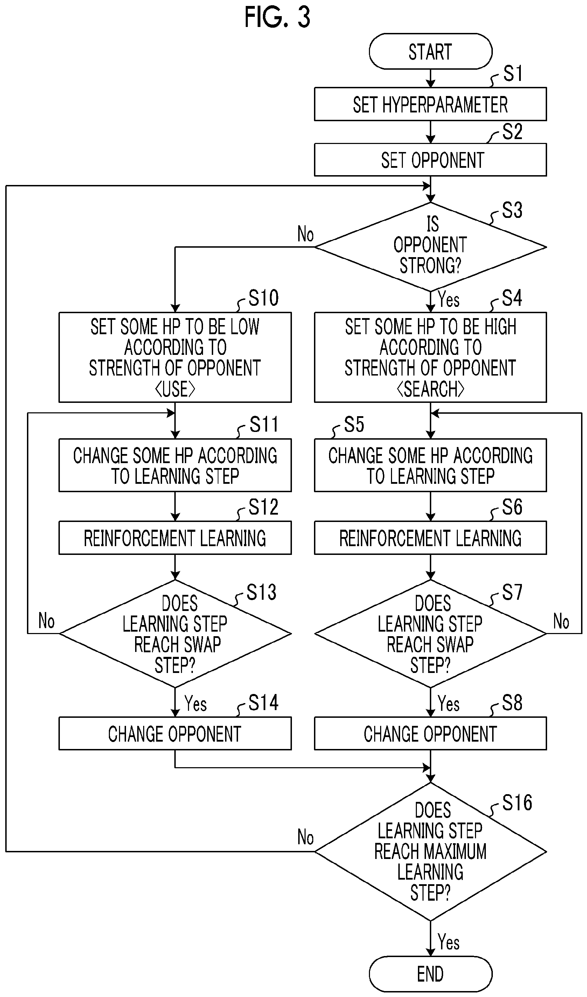

A learning device 10 and a learning method according to the present embodiment are a device and a method of performing learning of a learning model including a hyperparameter. Fig. 1 is a diagram for explaining learning using a learning model according to the present embodiment. Fig. 2 is a diagram schematically illustrating a learning device according to the present embodiment. Fig. 3 is a diagram illustrating a flow of a learning method according to the present embodiment.

### (Learning using Learning Model)

First, learning using a learning model M will be described with reference to Fig. 1. The learning model M is mounted on an agent 5 that executes an action At. As the target agent 5, for example, a machine capable of executing an operation for a robot, a vehicle, a vessel, an aircraft, or the like is applied. The agent 5 executes a predetermined action At under a predetermined environment 6 by using the learning model M.

As illustrated in Fig. 1, the learning model M is a neural network including a plurality of nodes. The neural network is a network in which a plurality of nodes are connected, and has a plurality of layers. The plurality of nodes are provided in each of the layers. Parameters of the neural network include weights and biases between the nodes. In addition, as the parameters of the neural network, there are hyperparameters such as the number of layers, the number of nodes, and a learning rate. In the present embodiment, in the learning of the learning model M, learning on the learning model M including the hyperparameters is performed.

Next, the learning using the learning model M will be described. As the learning, there is reinforcement learning. The reinforcement learning is an unsupervised learning. The agent 5 performs learning of the weights and the biases between the nodes in the learning model M such that a reward Rt assigned under a predetermined environment 6 is maximized.

In the reinforcement learning, the agent 5 acquires a state St from the environment 6 (an environment unit 22 to be described later), and also acquires a reward Rt from the environment 6. In addition, the agent 5 selects an action At from the learning model M based on the acquired state St and the acquired reward Rt. In a case where the action At selected by the agent 5 is executed, the state St of the agent 5 in the environment 6 transitions to a state St+1. In addition, a reward Rt+1 based on the executed action At, the state St before the transition, and the state St+1 after the transition is assigned to the agent 5. Further, in the reinforcement learning, the above learning is repeated by the predetermined number of learning steps for evaluation such that the reward Rt assigned to the agent 5 is maximized.

### (Learning Device)

Next, the learning device 10 will be described with reference to Fig. 2. The learning device 10 executes reinforcement learning of the agent 5 in an environment serving as a virtual space. The learning device 10 includes an environment unit 22 and a learning unit 23. Note that the environment unit 22 and the learning unit 23 function as a processing unit that performs learning of the learning model of the agent and a storage unit that stores various data to be used in the learning. Note that the hardware configuration of the learning device 10 is not particularly limited. In the present embodiment, in Fig. 2, a block illustrated in a rectangular shape functions as a processing unit, and a block illustrated in a cylindrical shape functions as a storage unit.

The environment unit 22 provides a competitive environment in which the agents 5 compete against each other. Specifically, the environment unit 22 assigns a reward Rt to the agent 5 or derives a state St of the agent 5 for transition by the action At. The environment unit 22 stores various models such as a motion model Ma, an environment model Mb, and a competitive model Mc. The competitive model Mc is a competitive model of the agent 5 to be an opponent of the agent 5 as a learning target, and competitive models Mc for an opponent A to an opponent N are prepared. The environment unit 22 receives the action At performed by the agent 5 as an input, and calculates the state St of the agent 5 as an output by using the motion model Ma, the environment model Mb, and the competitive model Mc. The calculated state St is output to the learning unit 23. In addition, the environment unit 22 stores a reward model Md that calculates a reward. The reward model Md is a model that receives the action At performed by the agent 5, the state St, and the state St+1 as a transition destination as inputs and calculates a reward Rt to be assigned to the agent 5 as an output. The calculated reward Rt is output to the learning unit 23.

The learning unit 23 executes learning of the learning model M. The learning unit 23 executes reinforcement learning as learning. The learning unit 23 includes a model comparison unit 31 that compares a strength of the competitive model Mc, an HP setting unit 32 that sets a hyperparameter of the learning model M, and a reinforcement learning unit 33 that performs reinforcement learning. In addition, the learning unit 23 includes a database 35 that stores a reinforcement learning model as a learning result obtained by reinforcement learning.

The model comparison unit 31 compares, for example, the strength of the learning model M of the agent 5 as a learning target and the strength of the competitive model Mc of the agent 5 as an opponent, and evaluates whether or not the competitive model Mc is strong against the learning model M, based on a comparison result. Specifically, the model comparison unit 31 causes the learning model M after learning is stopped (after learning is completed) to compete against the competitive model Mc, and sets a winning rate or a rating of the competitive model Mc, as a strength evaluation index. The model comparison unit 31 determines that the competitive model Mc is strong in a case where the winning rate or the rating of the competitive model Mc is higher than the winning rate or the rating of the learning model M, and determines that the competitive model Mc is weak in a case where the winning rate or the rating of the competitive model Mc is lower than the winning rate or the rating of the learning model M.

Note that the model comparison unit 31 may compare the strengths of the competitive models Mc with each other and evaluate whether or not the competitive model Mc is strong, based on a comparison result. Specifically, the model comparison unit 31 sets a predetermined competitive model Mc as a reference, causes the reference competitive model Mc and another competitive model Mc to compete against each other, and sets a winning rate or an ELO rating of the competitive model Mc as a strength evaluation index. The model comparison unit 31 determines that the competitive model Mc is strong in a case where the winning rate or the rating of the competitive model Mc is higher than the winning rate or the rating of the reference competitive model Mc, and determines that the competitive model Mc is weak in a case where the winning rate or the rating of the competitive model Mc is lower than the winning rate or the rating of the reference competitive model Mc.

In addition, the model comparison unit 31 may use a Kullback-Leibler divergence (KL distance) instead of the winning rate or the rating. The KL divergence is an index indicating a similarity between probability distributions of the states St and the actions At of the models, and the models are the learning model M and the competitive model Mc, or the competitive models Mc. In a case where the KL divergence is small, the similarity is high, and in a case where the KL divergence is large, the similarity is low. The model comparison unit 31 determines that the competitive model Mc is strong in a case where the KL divergence is equal to or larger than a preset threshold value, and determines that the competitive model Mc is weak in a case where the KL divergence is smaller than the threshold value.

The HP setting unit 32 sets a hyperparameter of the learning model M according to the strength of the competitive model Mc. Specifically, the HP setting unit 32 sets the hyperparameter such that the reinforcement learning of the learning model M is performed on a search side in a case where the strength of the agent 5 as an opponent is strong with respect to the agent 5 as a learning target. On the other hand, the HP setting unit 32 sets the hyperparameter such that the reinforcement learning of the learning model M is performed on a use side in a case where the strength of the agent 5 as an opponent is weak with respect to the agent 5 as a learning target. As the hyperparameter to be set, for example, there are ε (a random selection probability), a learning rate, and the like. The random selection probability ε is a probability of selecting the action At in the learning model M. In a case where ε is large, the action At on the search side is selected, and in a case where ε is small, the action At on the use side is selected. The learning rate is a degree of update of learning. In a case where the learning rate is high, an update frequency increases, and thus, reinforcement learning of the learning model M is performed on the search side. In a case where the learning rate is low, an update frequency decreases, and thus, reinforcement learning of the learning model M is performed on the use side. Note that, in a case where the strength of the learning model M and the strength of the competitive model Mc are the same, the HP setting unit 32 sets the hyperparameter such that the reinforcement learning of the learning model M is performed on the search side.

The reinforcement learning unit 33 executes learning based on the reward Rt assigned from the environment unit 22, and executes reinforcement learning of the learning model M. Specifically, the reinforcement learning unit 33 executes reinforcement learning of the learning model M by a predetermined learning step T while updating the hyperparameter such that the reward Rt assigned to each agent 5 is maximized. Here, as the predetermined learning step T, there are a swap step that is set for each opponent and a maximum learning step that is an end of learning. In addition, the reinforcement learning unit 33 acquires a reinforcement learning model M (hereinafter, simply referred to as a learning model M) that is a learning result of reinforcement learning by executing reinforcement learning of the learning model M, and stores the reinforcement learning model M that is acquired for each update of the hyperparameters in the database 35. Assuming that an initial value of the hyperparameter is 0 and an update value of the hyperparameter is N, and that an initial step of the learning steps T is 0 and a final step of the learning steps T is S, the database 35 stores the learning models from the reinforcement learning model R0 to the reinforcement learning model RN, and stores the reinforcement learning model M from a learning step T0 to a learning step TS in each of the reinforcement learning models R0 to RN.

### (Learning Method)

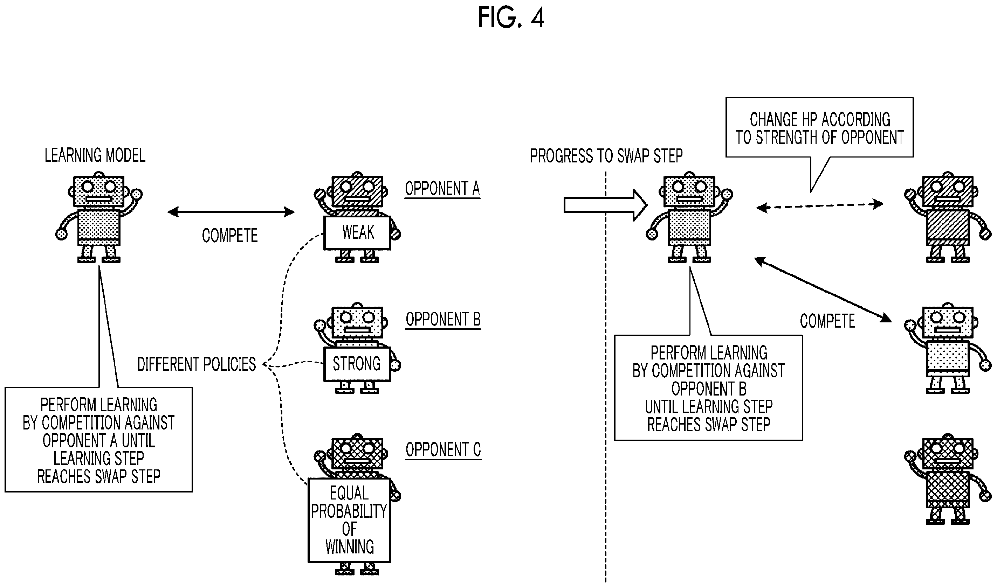

Next, a learning method executed by the learning device 10 will be described with reference to Fig. 3 and Fig. 4. In the learning method, first, the learning device 10 executes a step of setting a parameter value of the hyperparameter of the learning model M (step S1). In step S1, the parameter value of the hyperparameter is arbitrarily set. Specifically, in step S1, as the type of the hyperparameter, the number of layers and the number of nodes in each layer are set.

Subsequently, in the learning method, the learning device 10 executes a step of setting the agent 5 to be an opponent of the agent 5 as a learning target (step S2). In step S2, the learning device 10 sets a predetermined competitive model Mc (in Fig. 4, a strong competitive model Mc) from the plurality of competitive models Mc stored in the environment unit 22.

Subsequently, in the learning method, the model comparison unit 31 of the learning device 10 executes a step of evaluating the strength of the set opponent (step S3). Specifically, in step S3, the model comparison unit 31 executes a step of determining whether or not the set opponent is strong (step S3). In a case where the model comparison unit 31 determines that the opponent is strong (Yes in step S3), the HP setting unit 32 executes a step of setting the hyperparameter such that the reinforcement learning of the learning model M is performed on the search side (step S4).

After the execution of step S4, in the learning method, the HP setting unit 32 executes a step of setting a parameter value of the hyperparameter of the learning model M according to the learning step T (step S5). In step S5, the parameter value of the hyperparameter is arbitrarily set. Here, the type of the hyperparameter that is set in step S4 is a hyperparameter for setting reinforcement learning to be performed on the search side or the use side. On the other hand, the type of the hyperparameter that is set in step S5 may be different from the type of the hyperparameter that is set in step S4, or may be the same as the type of the hyperparameter that is set in step S4, and is not particularly limited. Specifically, in step S5, as the type of the hyperparameter, ε (a random selection probability) and a learning rate are set. The hyperparameter is set to be decreased according to the learning step T.

In addition, in the learning method, a step of executing reinforcement learning using the learning model M after the hyperparameter is set is performed (step S6). In step S6, the reinforcement learning unit 33 of the learning device 10 executes reinforcement learning of the learning model M in which the parameter value of the hyperparameter is set in step S5 such that the reward Rt assigned to the agent 5 is maximized. In addition, in step S6, the reinforcement learning unit 33 stores the learning models M0 to MN obtained by executing reinforcement learning in the database 36.

Next, in the learning method, the reinforcement learning unit 33 of the learning device 10 determines whether or not the learning step T reaches the swap step (step S7). In step S7, in a case where the reinforcement learning unit 33 determines that the learning step T reaches the swap step (Yes in step S7), the reinforcement learning unit 33 executes a step of changing the opponent (step S8). On the other hand, in step S7, in a case where the reinforcement learning unit 33 determines that the learning step T does not reach the swap step (No in step S7), the process proceeds to step S5 again, and processing of step S5 to step S7 is repeatedly executed until the learning step T reaches the swap step.

On the other hand, in step S3 of the learning method, in a case where the model comparison unit 31 determines that the opponent is weak (No in step S3), the HP setting unit 32 executes a step of setting the hyperparameter such that the reinforcement learning of the learning model M is performed on the use side (step S10).

After the execution of step S10, in the learning method, the HP setting unit 32 executes a step of setting a parameter value of the hyperparameter of the learning model M according to the learning step T (step S11). In step S11, similarly to step S5, the parameter value of the hyperparameter is arbitrarily set.

In addition, in the learning method, a step of executing reinforcement learning using the learning model M after the hyperparameter is set is performed (step S12). In step S12, similarly to step S6, the reinforcement learning unit 33 of the learning device 10 executes reinforcement learning of the learning model M in which the parameter value of the hyperparameter is set in step S11 such that the reward Rt assigned to the agent 5 is maximized. In addition, in step S12, the reinforcement learning unit 33 stores the learning models M0 to MN obtained by executing reinforcement learning in the database 36.

Next, in the learning method, the reinforcement learning unit 33 of the learning device 10 determines whether or not the learning step T reaches the swap step (step S13). In step S13, in a case where the reinforcement learning unit 33 determines that the learning step T reaches the swap step (Yes in step S13), the reinforcement learning unit 33 executes a step of changing the opponent (step S14). On the other hand, in step S713, in a case where the reinforcement learning unit 33 determines that the learning step T does not reach the swap step (No in step S13), the process proceeds to step S11 again, and processing of step S11 to step S13 is repeatedly executed until the learning step T reaches the swap step.

After an execution of step S8 or step S14, in the learning method, the reinforcement learning unit 33 of the learning device 10 determines whether or not the learning step T reaches the maximum learning step S (step S16). In step S16, in a case where the reinforcement learning unit 33 determines that the learning step T reaches the maximum learning step S (Yes in step S16), reinforcement learning is ended, and a series of learning methods is ended. Note that, after reinforcement learning is ended, the trained learning models M0 to MN may be evaluated, and the learning model M may be selected based on the evaluation result. On the other hand, in step S16, in a case where the reinforcement learning unit 33 determines that the learning step T does not reach the maximum learning step S (No in step S16), the process proceeds to step S3, and processing of step S3 to step S16 is repeatedly executed until the learning step T reaches the maximum learning step S.

In this manner, the learning unit 23 that executes step S1 to step S16 described above functions as a processing unit for causing the agent 5 to execute reinforcement learning. In addition, the learning device 10 stores a learning program P for executing the above learning method in a storage unit of the learning device 10.

Fig. 4 is a diagram for explaining the learning method described above. As illustrated in Fig. 4, the learning model M executes reinforcement learning by a competition against an opponent (in Fig. 4, a weak opponent A) having a predetermined strength until the learning step T reaches the swap step. Thereafter, the opponent is changed, and the learning model M executes again reinforcement learning by a competition against an opponent (in Fig. 4, a strong opponent B) having a predetermined strength until the learning step T reaches the swap step. In a case where the opponent is changed, the hyperparameter of the learning model M is changed according to the strength of the opponent. In Fig. 4, since the opponent is changed from a weak opponent to a strong opponent, the hyperparameter is set such that the reinforcement learning is performed on the search side.

As described above, the learning device 10, the learning method, and the learning program P according to the present embodiment are understood, for example, as follows.

According to a first aspect, there is provided a learning device 10 including: a processing unit that performs reinforcement learning of a learning model M of an agent 5 under a competitive environment in which agents 5 compete against each other, in which the learning model M includes a hyperparameter, and the processing unit executes: a step S2 of setting the agent 5 to be an opponent of the agent 5 as a learning target; a step S3 of evaluating a strength of the agent 5 that is the opponent; a step S4 or S10 of setting the hyperparameter of the learning model M of the agent 5 as the learning target according to the strength of the agent 5 that is the opponent; and a step S6 or S12 of executing the reinforcement learning by using the learning model M after the setting.

According to this configuration, it is possible to set the hyperparameter of the learning model M according to the strength of the opponent. Thus, it is possible to execute reinforcement learning of the learning model M according to the strength of the opponent. Therefore, it is possible to execute reinforcement learning of the learning model M with high versatility under a competitive environment.

In a second aspect, in the step S4 or S10 of setting the hyperparameter, in a case where the strength of the agent that is the opponent is stronger than a strength of the agent as the learning target, the hyperparameter is set such that the reinforcement learning of the learning model is performed on a search side, and in a case where the strength of the agent that is the opponent is weaker than the strength of the agent as the learning target, the hyperparameter is set such that the reinforcement learning of the learning model is performed on a use side.

According to this configuration, in a case where the strength of the opponent is strong, reinforcement learning of the learning model M can be set as reinforcement learning to be performed on the search side, and in a case where the strength of the opponent is weak, reinforcement learning of the learning model M can be set as reinforcement learning to be performed on the use side. Therefore, it is possible to execute appropriate reinforcement learning according to the opponent.

In a third aspect, in the step S3 of evaluating the strength of the agent 5, as an index of the strength of the agent 5, at least one of a competitive winning rate, a rating, or a KL divergence is included.

According to this configuration, it is possible to appropriately evaluate the strength of the opponent.

According to a fourth aspect, there is provided a learning method of performing reinforcement learning of a learning model M of an agent 5 under a competitive environment in which agents 5 compete against each other by using a learning device 10, in which the learning model M includes a hyperparameter, and the learning method causes the learning device 10 to execute: a step S2 of setting the agent 5 to be an opponent of the agent 5 as a learning target; a step S3 of evaluating a strength of the agent 5 that is the opponent; a step S4 or S10 of setting the hyperparameter of the learning model M of the agent 5 as the learning target according to the strength of the agent 5 that is the opponent; and a step S6 or S12 of executing the reinforcement learning by using the learning model M after the setting.

According to this configuration, it is possible to set the hyperparameter of the learning model M according to the strength of the opponent. Thus, it is possible to execute reinforcement learning of the learning model M according to the strength of the opponent. Therefore, it is possible to execute reinforcement learning of the learning model M with high versatility under a competitive environment.

According to a fifth aspect, there is provided a learning program P for performing reinforcement learning of a learning model M of an agent 5 under a competitive environment in which agents 5 compete against each other by using a learning device 10, in which the learning model M includes a hyperparameter, and the learning program P causes the learning device 10 to execute: a step S2 of setting the agent 5 to be an opponent of the agent 5 as a learning target; a step S3 of evaluating a strength of the agent 5 that is the opponent; a step S4 or S10 of setting the hyperparameter of the learning model M of the agent 5 as the learning target according to the strength of the agent 5 that is the opponent; and a step S6 or S12 of executing the reinforcement learning by using the learning model M after the setting.

According to this configuration, it is possible to set the hyperparameter of the learning model M according to the strength of the opponent. Thus, it is possible to execute reinforcement learning of the learning model M according to the strength of the opponent. Therefore, it is possible to execute reinforcement learning of the learning model M with high versatility under a competitive environment.

### Reference Signs List

5: agent
10: learning device
22: environment unit
23: learning unit
31: model comparison unit
32: HP setting unit
33: reinforcement learning unit
35: database
M: learning model
Ma: motion model
Mb: environment model
Mc: competitive model
Md: reward model
P: learning program

## Claims

1. A learning device comprising:
a processing unit that performs reinforcement learning of a learning model of an agent under a competitive environment in which agents compete against each other,
wherein the learning model includes a hyperparameter, and
the processing unit executes:
a step of setting the agent to be an opponent of the agent as a learning target;
a step of evaluating a strength of the agent that is the opponent;
a step of setting the hyperparameter of the learning model of the agent as the learning target according to the strength of the agent that is the opponent; and
a step of executing the reinforcement learning by using the learning model after the setting.

2. The learning device according to Claim 1,
wherein, in the step of setting the hyperparameter,
in a case where the strength of the agent that is the opponent is stronger than a strength of the agent as the learning target, the hyperparameter is set such that the reinforcement learning of the learning model is performed on a search side, and
in a case where the strength of the agent that is the opponent is weaker than the strength of the agent as the learning target, the hyperparameter is set such that the reinforcement learning of the learning model is performed on a use side.

3. The learning device according to Claim 1 or 2,
wherein, in the step of evaluating the strength of the agent, as an index of the strength of the agent, at least one of a competitive winning rate, a rating, or a KL divergence is included.

4. A learning method of performing reinforcement learning of a learning model of an agent under a competitive environment in which agents compete against each other by using a learning device,
wherein the learning model includes a hyperparameter, and
the learning method causes the learning device to execute:
a step of setting the agent to be an opponent of the agent as a learning target;
a step of evaluating a strength of the agent that is the opponent;
a step of setting the hyperparameter of the learning model of the agent as the learning target according to the strength of the agent that is the opponent; and
a step of executing the reinforcement learning by using the learning model after the setting.

5. A learning program for performing reinforcement learning of a learning model of an agent under a competitive environment in which agents compete against each other by using a learning device,
wherein the learning model includes a hyperparameter, and
the learning program causes the learning device to execute:
a step of setting the agent to be an opponent of the agent as a learning target;
a step of evaluating a strength of the agent that is the opponent;
a step of setting the hyperparameter of the learning model of the agent as the learning target according to the strength of the agent that is the opponent; and
a step of executing the reinforcement learning by using the learning model after the setting.
